# Europäisches Patentamt

# European Patent Office

# Office européen des brevets

(19)

(11) Numéro de publication: **0 255 411**
**B1**

(12)

# FASCICULE DE BREVET EUROPEEN

(45) Date de publication du fascicule du brevet: **23.01.91**

(21) Numéro de dépôt: **87401407.9**

(22) Date de dépôt: **22.06.87**

(51) Int. Cl.⁵: **F 27 D 17/00,** F 27 D 13/00,
C 04 B 35/52

(54) Procédé et installation pour le préchauffage, dans un four de cuisson, de produits carbonés tels qu'électrodes.

(30) Priorité: **31.07.86 FR 8611106**

(43) Date de publication de la demande:
**03.02.88 Bulletin 88/05**

(45) Mention de la délivrance du brevet:
**23.01.91 Bulletin 91/04**

(84) Etats contractants désignés:
**AT BE DE ES GB LU NL SE**

(56) Documents cités:
**EP-A-0 172 791**
**DE-A-2 652 587**
**FR-A-1 224 334**
**FR-A-2 552 535**
**US-A-4 128 394**
**US-A-4 322 203**

(73) Titulaire: **STEIN HEURTEY**
**Z.A.I. du Bois de l'Epine BP No 69**
**F-91130 Ris Orangis (FR)**

(72) Inventeur: **Daubricourt, Jean-Claude**
**10, rue Montgeron**
**F-91230 Montgeron (FR)**

(74) Mandataire: **Armengaud Ainé, Alain**
**Cabinet ARMENGAUD AINE 3 Avenue Bugeaud**
**F-75116 Paris (FR)**

Courier Press, Leamington Spa, England.

## Description

La présente invention concerne un procédé de préchauffage, dans un four de cuisson, de produits carbonés, tels qu'électrodes, ainsi qu'une installation propre à la réalisation de ce procédé.

Les fours auxquels s'applique l'invention, généralement du type à sole mobile, assurent le chauffage d'une charge de produits carbonés, tels qu'électrodes en carbone, jusqu'à une température de 800 à 900°C, grâce à des brûleurs placés sur les parois du four et dont les fumées sont brassées par des ventilateurs, de façon à provoquer une circulation des fumées dans tous les points du four.

Dans le cas des électrodes, la matière carbonée qui les constitue est imprégnée, avant la cuisson, de goudrons qui dégagent des vapeurs lorsque le four est à une température supérieure à 250°C.

Ces vapeurs, qui ne doivent pas être rejetées telles quelles dans la cheminée, sont brûlées dans un incinérateur placé sur le circuit de fumées du four, ou de plusieurs fours, avec excès d'air, de façon à maintenir une température assez élevée, tout en assurant la combustion complète sans imbrûlés.

Cette incinération de vapeurs, dont la masse totale peut atteindre dix pour cent de la charge, produit une quantité de chaleur importante, dont la récupération, par exemple pour le chauffage des charges d'autres fours, présente un intérêt économique certain.

Il est connu (FR—A—2 552 535) de récupérer les fumées chaudes sortant de l'incinérateur et de les injecter dans une cellule de préchauffage séparée des fours, ou même directement dans un four. Cette technique présente l'inconvénient de nécessiter la mise en oeuvre de ventilateurs, de vannes et de conduites capables de supporter la haute température des fumées.

Un autre inconvénient réside dans le mélange de fumées d'incinérateur contenant un fort excès d'air avec les fumées venant d'autres fours et chargées d'imbrûlés, lorsque l'incinérateur est commun à plusieurs fours et que le préchauffage est effectué dans le four sans l'aide d'une cellule extérieure séparée.

Il est également connu (US—A—4 322 203) de récupérer une partie de la chaleur issue de l'incinération du gaz contenant des hydrocarbures en utilisant un échangeur de chaleur alimenté en air froid pour chauffer l'air de combustion.

L'invention concerne un procédé qui permet une récupération de la chaleur produite par l'incinérateur sous une forme moins onéreuse, et d'une utilisation plus souple.

En conséquence, cette invention concerne un procédé pour le préchauffage de produits carbonés, tels que notamment des électrodes, dans un ou plusieurs fours de cuisson, associés à un incinérateur permettant de brûler les matières volatiles qui se dégagent des fours pendant le chauffage, une partie de la chaleur dégagée par la combustion de ces matières volatiles étant récupérée pour assurer le préchauffage des produits carbonés jusqu'à une certaine température, caractérisé en ce que l'on utilise un échangeur de chaleur alimenté en air froid et dont la source chaude est constituée par les fumées produites par ladite incinérateur pour produire de l'air chaud destiné au préchauffage des produits carbonés et en ce que l'on effectue une régulation du débit d'air chaud de manière à maintenir la température de l'air chaud ainsi produit à environ 450°, afin d'assurer un préchauffage des produits carbonés à une température de l'ordre de 200 à 250°C.

Ainsi le procédé selon l'invention associant à l'incinérateur un échangeur de chaleur, permet d'obtenir, dans des conditions optimales d'économie et de souplesse, de l'air chaud qui est utilisé pour le préchauffage des produits.

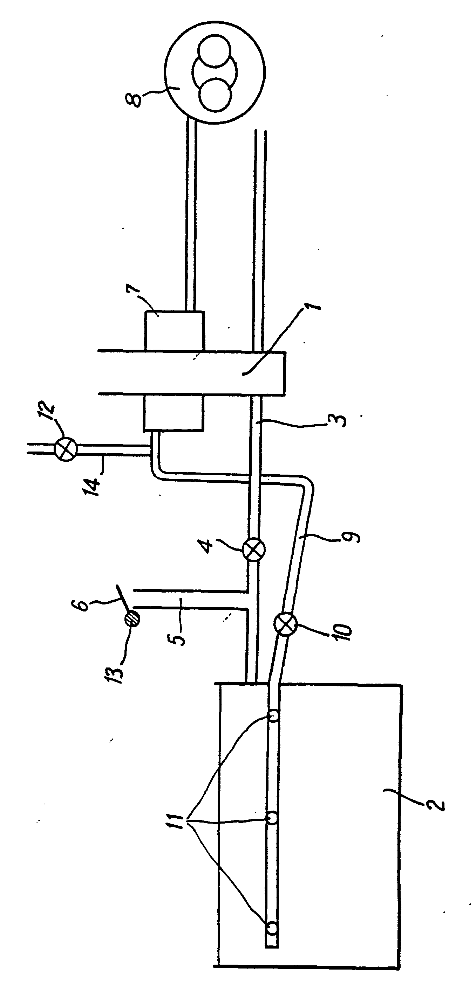

Le procédé suivant l'invention peut avantageusement être mis en oeuvre au moyen d'une installation faisant également partie de l'invention, défini notamment dans la revendication 3, et dont on a décrit ci-après, en référence à la Figure unique du dessin annexe, une forme de réalisation, donnée uniquement à titre d'exemple.

L'installation comprend un incinérateur 1, associé à plusieurs fours à sole mobile 2 et relié à chacun d'entre eux par un conduit de fumées 3. Sur chaque conduit 3, entre le four 2 et l'incinérateur 1, est placée une vanne 4, précédée d'une cheminée 5 pouvant être fermée dans sa partie supérieure par un clapet 6, par l'action d'un mécanisme usuel 13.

A la sortie de fumées de l'incinérateur est placé, conformément à l'invention, un échangeur de chaleur 7, alimenté en air froid par un ventilateur 8.

L'air chaud sortant de l'échangeur 7 peut être envoyé dans un four dont la charge est en début de chauffage, grâce à une conduite 9 d'air chaud, munie d'une vanne 10, à travers un ou plusieurs orifices d'injection 11.

Pendant toute la durée de préchauffage du four au moyen de l'air chaud, les brûleurs du four sont éteints et les ventilateurs de brassage tournent à leur vitesse maximale, de façon à favoriser le transfert de chaleur par convection entre l'air chaud et la charge. En même temps, la vanne 4 est fermée, isolant ainsi le four du circuit normal de fumées, et le clapet 6 de la cheminée 5 est maintenu ouvert, pour laisser échapper l'air chaud sortant du four.

La température de l'air sortant de l'échangeur 7 est maintenue aux environs de 450°C, par le moyen d'une régulation du débit d'air chaud. Cette régulation est effectuée par un dispositif classique, non représenté, lequel commande le débit des vannes 10, ou, si besoin est, l'ouverture d'un débit de fuite vers l'atmosphère par une conduite 14 piquée sur la conduite 9, et au travers d'une vanne régulatrice 12.

La charge est ainsi préchauffée jusqu'à une température de 200 à 250°C, à partir de laquelle les vapeurs d'hydrocarbure commencent à apparaître. Le préchauffage est alors arrêté, par fermeture de la vanne 10. Eventuellement, suivant la nature de la charge et de son imprégnation, une purge de l'atmosphère du four par une injection d'un fluide neutre, comme de l'azote, peut être effectuée au moyen d'un dispositif d'injection, non représenté. Le clapet 6 est ensuite fermé et la vanne 4 ouverte, puis les brûleurs du four sont allumés.

Suivant une variante, l'installation comporte une cellule de préchauffage indépendante du four, qui peut être utilisée pour préchauffer des produits dont les caractéristiques géométriques sont telles que le transfert de chaleur par convection, réalisable dans le four, serait insuffisant pour obtenir une durée de préchauffage convenable. Dans ce cas, les produits froids sont chargés dans une cellule semblable au four 2, mais sans brûleur et munie uniquement des arrivées d'air chaud provenant de l'échangeur couplé à l'incinérateur. La cellule est équipée de ventilateurs de brassage puissants, dont le fonctionnement, limité à la température de l'air chaud, autorise des performances aérodynamiques plus élevées que celles des ventilateurs du four, qui doivent pouvoir fonctionner aux températures maximales obtenues dans le four (environ 800°C).

A la fin du préchauffage, la charge est transférée dans un four et subit le processus habituel de chauffage. Ce transfert est réalisé de façon simple, car la charge est disposée sur une sole mobile, qui peut indifféremment s'encastrer dans la cellule de préchauffage ou dans un four.

Le récupérateur fonctionne même lorsqu'il n'y a pas de dégagement de matière volatile et que les fumées sortant du four sont chaudes.

**Revendications**

1. Procédé pour le préchauffage de produits carbonés, tels que notamment des électrodes, dans un ou plusieurs fours de cuisson, associés à un incinérateur permettant de brûler les matières volatiles qui se dégagent des fours pendant le chauffage, une partie de la chaleur dégagée par la combustion de ces matières volatiles étant récupérée pour assurer le préchauffage des produits carbonés jusqu'à une certaine température, caractérisé en ce que l'on utilise un échangeur de chaleur alimenté en air froid et dont la source chaude est constituée par les fumées produites par ledit incinérateur pour produire de l'air chaud destiné au préchauffage des produits carbonés et en ce que l'on effectue une régulation du débit d'air chaud de manière à maintenir la température de l'air chaud ainsi produit à environ 450°C, afin d'assurer un préchauffage des produits carbonés à une température de l'ordre de 200 à 250°C.

2. Procédé suivant la revendication 1, caractérisé en ce que l'air chaud provenant de l'échangeur de chaleur est envoyé dans une cellule de préchauffage, indépendante du ou des fours de cuisson et dans laquelle est placée une charge froide, charge qui, lorsqu'elle a atteint la température de préchauffage, est transférée dans un four de chauffage par déplacement de la sole mobile dont est munie la cellule.

3. Installation pour la mise en oeuvre du procédé selon la revendication 1, comportant une pluralité de fours de cuisson (2) reliés à un incinérateur (1) permettant de brûler les matières volatiles qui se dégagent des fours pendant le chauffage, caractérisée en ce qu'elle comporte en outre:

un échangeur de chaleur (7) placé sur la sortie des fumées dudit incinérateur (1), alimenté en air froid et produisant de l'air chaud envoyé dans lesdits fours de cuisson;

une canalisation (9) propre à chaque four et comportant des moyens (10) de contrôle du débit d'air chaud pour amener cet air dudit échangeur audit four correspondant;

un ventilateur de brassage placé dans chacun des fours pour favoriser le transfert thermique par convection de cet air chaud vers la charge de produits carbonés contenus dans le four.

4. Installation suivant la revendication 3, caractérisée en ce que les conduits de fumées (3) qui relient chaque four à l'incinérateur (1) sont munis chacun d'une cheminée (5) propre à chaque four et d'une vanne (12), située en aval de la cheminée (14) permettant de fermer le conduit de fumées (3) allant vers l'incinérateur.

5. Installation suivant l'une quelconque des revendications 3 et 4, caractérisée en ce que la cheminée (5) propre à chaque four est munie d'un clapet (6) de fermeture permettant sa mise hors service, lorsque le four est alimenté par des moyens de chauffage usuels.

**Patentansprüche**

1. Verfahren zur Vorheizung von kohlenstoffhaltigen Gegenständen, wie Elektroden, in einem oder mehreren Brennöfen, denen eine Verbrennungseinrichtung beigeordnet ist, mit welcher sich währen des Ofenbetriebs freisetzende flüchtige Materialien verbrennbar sind, wobei ein Teil der durch die Verbrennung dieser flüchtigen Materialien erzeugten Wärme zur Vorheizung der kohlenstoffhaltigen Gegenstände bis auf eine bestimmte Temperatur wiedergewonnen wird, dadurch gekennzeichnet, daß ein Wärmetauscher, der mit kalter Luft beschickt wird und dessen Wärmequelle durch die durch die Verbrennungseinrichtung erzeugten Rauchgase gebildet wird, verwendet wird, um warme Luft zu erzeugen, die dazu bestimmt ist, kohlenstoffhaltige Erzeugnisse vorzuheizen und dadurch, daß eine Regelung der Warmluftzufuhr derart bewirkt wird, daß die Temperatur der auf diese Weise erzeugten Warmluft auf ungefähr 450°C gehalten wird, um ein Vorheizen der kohlenstoffhaltigen Erzeugnisse auf eine Temperatur im Bereich von 200 bis 250°C zu gewährleisten.

2. Verfahren nach Anspruch 1, dadurch gekennzeichnet, daß die vom Wärmetauscher herrührende Warmluft in eine von dem oder den Brennöfen unabhängige Vorheizzelle geleitet wird, in welcher eine kalte Charge angeordnet ist, die nach Erreichen der Vorheiztemperatur durch Verschieben der beweglichen Sohle, mit welcher die Zelle versehen ist, in einen Brennofen überführt wird.

3. Vorrichtung zur Durchführung des Verfahrens nach Anspruch 1 mit einer Anzahl von Brennöfen (2), die mit einer Verbrennungseinrichtung (1) verbunden sind, der eine Verbrennung der flüchtigen Stoffe ermöglicht, die während des Heizens in den Öfen freiwerden, dadurch gekennzeichnet, daß die Vorrichtung zusätzlich aufweist:

einen Wärmetauscher (7), der am Rauchgasauslaß der Verbrennungseinrichtung (1) angeordnet ist, mit Kaltluft beschickt wird und Warmluft erzeugt, die in die Brennöfen geleitet wird;

ein zum jeweiligen Ofen gehörige Leitung (9), die einen Warmluft-Mengenregelungseinrichtung (10) aufweist, um die Luft des Tauschers zum entsprechenden Ofen mitzunehmen;

ein in jedem der Öfen angeordnetes Umwälzgebläse, um den thermischen Strömungstransport der Warmluft zu der im Ofen befindlichen Charge von kohlenstoffhaltigen Erzeugnissen zu begünstigen.

4. Vorrichtung nach Anspruch 3, dadurch gekennzeichnet, daß die Rauchgasleitungen (3), welche jeden Ofen mit der Verbrennungseinrichtung (1) verbinden, jeweils mit einem Abzug (5) für jeden Ofen versehen sind und ein Ventil (12) aufweisen, welches stromabwärts des Abzugs (14) angeordnet ist und ein Schließen der Rauchgasleitung (3) gegen die Verbrennungseinrichtung hin ermöglicht.

5. Vorrichtung nach einem der Ansprüche 3 und 4, dadurch gekennzeichnet, daß der Abzug (5) eines jeden Ofens mit einer Schließklappe (6) versehen ist, die eine Abschaltung ermöglicht, wenn der Ofen mit üblichen Heizmitteln versorgt wird.

**Claims**

1. Process for preheating carbonaceous products, such as in particular electrodes, in one or more firing furnaces, the furnaces being associated with an incinerator enabling the volatile substances given off from the furnaces during the heating to be burnt, a portion of the heat given off by the combustion of these volatile substances being recovered to provide for the preheating of the carbonaceous products up to a certain temperature, characterized in that a heat exchanger is used, supplied with cold air and the heat source of which is constituted of the smoke gases produced by said incinerator for producing hot air intended for the preheating of the carbonaceous products, and in that a regulation of the hot air flow rate is carried out in such a way as to keep the temperature of the hot air thus produced at approximately 450°C, in order to assure a preheating of the carbonaceous products to a temperature of the order of 200 to 250°C.

2. Process according to Claim 1, characterized in that the hot air coming from the heat exchanger is fed into a preheating cell, independent of the firing furnace or furnaces, and into which the cold charge is placed, which charge, when it has reached the preheat temperature, is transferred into a heating furnace by movement of the movable floor with which the cell is equipped.

3. Installation for carrying out the process according to Claim 1, comprising a plurality of firing furnaces (2), connected to an incinerator (1), enabling the volatile substances given off by the furnaces during the heating to be burnt, characterized in that it comprises, in addition:

a heat exchanger (7), situated at the outlet for the smoke gases from said incinerator (1), supplied with cold air and producing hot air despatched into said firing furnaces;

a separate duct (9) for each furnace comprising means (10) for regulating the flow rate of hot air for bringing this air from said exchanger to said corresponding furnace;

a mixing fan situated in each of the furnaces for promoting heat transfer by convection of this hot air to the charge of carbonaceous products contained in the furnace.

4. Installation according to Claim 3, characterized in that the smoke ducts (3) which connect each furnace to the incinerator (1) are each equipped with a chimney (5) proper to that furnace and with a valve (12), situated downstream of the chimney (14), enabling the smoke duct (3) leading to the incinerator to be closed.

5. Installation according to any one of Claims 3 and 4, characterized in that the chimney (5) proper to each furnace is equipped with a shut-off valve (6) enabling it to be taken out of operation when the furnace is being supplied by conventional heating means.